# EUROPÄISCHE PATENTSCHRIFT

(11) **EP 2 250 716 B1**
(45) Veröffentlichungstag und Bekanntmachung des Hinweises auf die Patenterteilung: **03.07.2019**
(21) Anmeldenummer: 09714441.4
(22) Anmeldetag: 26.02.2009
(51) Int. Cl.: H02B 1/56

(54) **ÜBERWACHUNGSEINRICHTUNG FÜR DEN BETRIEB VON SCHALTSCHRANKGERÄTEN**
MONITORING DEVICE FOR THE OPERATION OF SWITCH CABINETS
DISPOSITIF DE SURVEILLANCE D'ARMOIRES DE CONTRÔLE

(30) Priorität: 29.02.2008 DE 102008012097
(43) Veröffentlichungstag der Anmeldung: 17.11.2010
(73) Patentinhaber: Rittal GmbH & Co. KG, 35745 Herborn (DE)
(72) Erfinder: ROSSMANN, Martin, 35625 Hüttenberg-Reiskirchen (DE); ROSENTHAL, Daniel, 57072 Siegen (DE); PRINZ, Ulrich, 35781 Weilburg (DE)
(74) Vertreter: Angerhausen, Christoph
(86) Internationale Anmeldenummer: PCT/EP2009/001350
(87) Internationale Veröffentlichungsnummer: WO 2009/106319

(56) Entgegenhaltungen:
- DE-A1- 10 108 599
- DE-A1-102005 002 314
- DE-A1-102006 011 127
- GB-A- 2 311 168
- US-A1- 2002 005 667
- US-B1- 6 222 448
- US-B1- 7 031 880

## Beschreibung

Die Erfindung bezieht sich auf eine Überwachungseinrichtung für den Betrieb von Schaltschrankgeräten, insbesondere eines Klimagerätes, mit einer Erfassungseinrichtung für Betriebszustandsdaten der Schaltschrankgeräte, einer eine Auswerteeinrichtung aufweisenden Überwachungseinheit und einer Anzeigeeinrichtung zur Anzeige von Informationsdaten zu den Schaltschrankgeräten für eine Prüfperson, wobei die Auswerteeinrichtung eine Sammeleinrichtung für die Funktion des Schaltschrankgerätes beeinflussende unterschiedliche physikalische Betriebszustandsdaten über einen vergangenen Zeitraum hinweg und eine Verrechnungsvorrichtung für die Betriebszustandsdaten aufweist und dass der Anzeigeeinrichtung bereits vor einer Störung aus den Betriebszustandsdaten unter Verrechnen mittels der Verrechnungsvorrichtung hergeleitete Informationsdaten für die Prüfperson bereitgestellt sind.

Eine derartige Überwachungseinrichtung für den Betrieb von Schaltschrankgeräten ist aus der DE 101 08 599 A1 bekannt. Ähnliche Überwachungseinrichtungen beschreiben auch die GB 2 311168 A, die US 2002/005667 A1, die DE 10 2006 011127 A1, die DE 10 2005 002314 A1, die US 7,031,880 B1 und die US 6,222,448 B1.

Eine Überwachungseinrichtung für eine Schaltschrank-Klimatisierungseinrichtung dieser Art ist in der DE 196 09 651 C2 angegeben. Bei dieser bekannten Überwachungseinrichtung werden Betriebszustandsdaten einer Klimatisierungseinrichtung automatisch in Abhängigkeit von Sensorsignalen mittels einer zentralen Steuereinrichtung überwacht und in Abhängigkeit von den Sensorsignalen und/oder einstellbaren oder programmierbaren Vorgaben in Abstimmung auf unterschiedliche Kühlanforderungen oder auch einer Geräuschentwicklung optimiert gesteuert. Je nach Umgebung und darauf abgestimmtem Einsatz des Schaltschranks sowie dem Steuerungskonzept kann es vorkommen, dass Komponenten der Klimatisierungseinrichtungen mehr oder weniger belastet werden, wodurch die Lebensdauer oder Zuverlässigkeit des Gesamtsystems eingeschränkt sein kann und dann die Optimierung auf der Grundlage dieser Einschränkungen erfolgt, so dass insgesamt die Steuerung nicht mehr den Optimalzustand erreichen kann.

In der DE 196 09 689 B4 ist allgemeiner eine Schaltschranküberwachungs- und Schaltschranksteuerungseinrichtung mit einer zentralen Steuerungseinrichtung zum Überwachen, Steuern und/oder Regeln von Einbau- und/oder Anbaueinheiten gezeigt. Auch hierbei werden Betriebszustandsdaten von einer Erfassungseinrichtung in der zentralen Steuerungseinrichtung aufgenommen und bewertet sowie zur Anzeige gebracht, so dass eine Prüfperson Störungen erkennen und beheben kann. Auch Einstellparameter sind z. B. über einen PC-Schnittstellenausgang ablesbar und änderbar. Um die Service-Maßnahmen durchführen zu können, muss das ServicePersonal besonders eingewiesen sein, um Störungen fachgerecht zu beheben. Auch können Störungen zu einem für den Anwender Geräteausfall auch der von ihm eingesetzten Geräte führen.

In der DE 10 2006 011 127 A1 ist eine Schaltschranküberwachungseinrichtung gezeigt, die mit drahtlos mit einer Basisstation in Datenübertragungsverbindung gebrachten Sensoren ausgerüstet ist, die flexibel in der Schaltschrankanordnung positionierbar und Schaltschrankgeräten bzw. ihren Komponenten zuordenbar sind. Über Meldeeinheiten können Störungen oder Betriebszustände für eine Prüfperson zur Anzeige gebracht werden. Wenn auch mit diesen Maßnahmen eine verbesserte Störungserkennung erreicht wird, sind Fehlerzustände nicht völlig zu vermeiden.

Der Erfindung liegt die Aufgabe zugrunde, eine Überwachungseinrichtung für den Betrieb von Schaltschrankgeräten bereit zu stellen, die eine erhöhte Zuverlässigkeit erreichen lässt.

Diese Aufgabe wird mit den Merkmalen des Anspruches 1 gelöst. Hierbei ist vorgesehen, dass der vergangene Zeitraum sich von einem aktuellen Zeitpunkt bis zu dem Zeit-punkt der Erstinbetriebnahme des Schaltschrankgerätes oder einer betreffenden Gerätekomponente, oder bis zu einem zurückliegenden Wartungszeitpunkt, oder bis zum erstmaligen Auftreten eines anomalen Ereignisses, bei dem eine Abweichung von einem vorgegebenen Betriebszustand eintritt, erstreckt, dass die Auswerteeinrichtung eine Vergleichseinrichtung aufweist, mit der festgestellt ist, wann mindestens eine vorgegebene Änderung einer bestimmten Betriebszustandsdatenart gegenüber einem zuletzt gespeicherten oder einem vorgegebenen Wert dieser Betriebszustandsdatenart eingetreten ist, dass die Werte der betreffenden Betriebszustandsdatenart mit dem zugehörigen Zeitpunkt bei Überschreitung oder Feststellung der vorgegebenen Änderung in der Sammeleinrichtung ablegbar sind,
dass die Auswerteeinrichtung so ausgebildet ist, dass die Änderung der Betriebszustandsdatenart in vorgegebenen Intervallen oder bei Abfrage auf Anforderung der Prüfperson festgestellt wird,
dass die Verrechnungsvorrichtung zum Errechnen eines abgestuften Service-Anforderungsniveaus aus den Betriebszustandsdaten programmiert ist, und dass die Service-Anforderungsniveaus in unterschiedlichen Dringlichkeitsstufen optisch und/oder akustisch über die Anzeigevorrichtung signalisierbar sind,
wobei die Betriebszustandsdaten die Arbeitsvorgänge des Schaltschrankgerätes betreffende Funktionsdaten und äußere Einflussfaktoren betreffende Umgebungsdaten umfassen,
wobei die Funktionsdaten von dem Schaltschrankgerät verursachte Schwingungen, Geräusche, Wärme, Rauch, Leistungsparameter, eine Störung, Laufzeiten und Wartungsarbeiten umfassen, und wobei die Umgebungsdaten Umgebungstemperaturen, äußere Schwingungen, Feuchte und Rauch umfassen, und wobei die Überwachungs-einrichtung an dem Schaltschrankgerät und in dessen Umgebung angeordnete Sensoren zur Erfassung der Betriebszustandsdaten mit einer drahtlosen oder drahtgebundenen Datenübertragungsschnittstelle aufweist.
Durch die gesammelten Betriebszustandsarten unterschiedlicher Art über einen vergangenen Zeitraum hinweg und deren Verrechnung werden Informationsdaten hoher Zuverlässigkeit erhalten, die über die Anzeige der Prüfperson mitgeteilt werden und von dieser z. B. über ein mobiles mitgeführtes Handgerät jederzeit abrufbar sind. Auf der Basis der Vorgeschichte werden vorausschauend der Prüfperson Prognosewerte und erforderlichenfalls Anweisungen für Service-Maßnahmen angezeigt.

Dadurch, dass die Betriebszustandsdaten die Arbeitsvorgänge des Schaltschrankgerätes betreffende Funktionsdaten und äußere Einflussfaktoren betreffende Umgebungsdaten umfassen, wird eine erhöhte Zuverlässigkeit unterstützt Durch die Einbeziehung von Umgebungsdaten zusätzlich zu die eigentlichen Arbeitsvorgänge des Schaltschrankgerätes betreffenden Funktionsdaten wird eine erhöhte Genauigkeit der Zustandsanalyse des Schaltschrankgerätes und damit der Informationsdaten für die Prüfperson, wie Prognoseinformationen oder Serviceanweisungen erhalten.

Verschiedene Ausgestaltungen für die Verrechnung der Betriebszustandsdaten und Herleitung der Informationsdaten bestehen darin, dass die Verrechnungsvorrichtung zur Verrechnung nach vorgegebenen Algorithmen oder selbstlernend programmiert ist.

Mit den Maßnahmen, dass die Überwachungseinrichtung an dem Schaltschrankgerät und/oder in dessen Umgebung angeordnete Sensoren zur Erfassung von Betriebszustandsdaten mit einer drahtlosen oder drahtgebundenen Datenübertragungsschnittstelle aufweist, können die Betriebszustandsdaten zuverlässig erfasst werden.

Ein für die Bedienung vorteilhafter Aufbau wird dadurch erreicht, dass die Erfassungseinrichtung und die Anzeigeeinrichtung mit Schnittstellen zur drahtlosen Datenübertragung über Funk ausgestaltet sind, vorzugsweise bei einer Übertragung mit Chirp-Signalen, die eine erhöhte Übertragungssicherheit beispielsweise im Frequenzbereich von 2,4 GHz ergeben.

Die Erfindung wird nachfolgend anhand von Ausführungsbeispielen unter Bezugnahme auf die Zeichnungen näher erläutert. Es zeigen:
Fig. 1 eine Überwachungseinrichtung für den Betrieb von Schaltschrankgeräten mit mehreren Schaltschränken und einer damit in Datenübertragungsverbindung stehenden Überwachungseinheit und
Fig. 2 ein Diagramm zur Auswertung von Betriebszuständen der Schaltschrankgeräte.

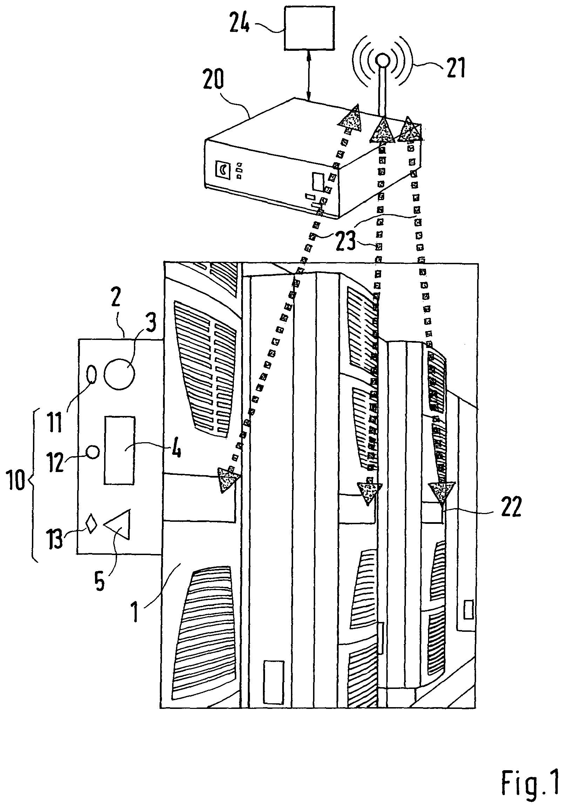

Fig. 1 zeigt eine Schaltschrankanordnung mit mehreren Schaltschränken 1 und darin angeordneten Schaltschrankgeräten, insbesondere Klimageräten 2 mit mehreren Gerätekomponenten, nämlich u.a. mindestens einem Lüfter 3, einem Kompressor 4 und Ventilen 5.

In dem mindestens einen Schaltschrank ist eine Erfassungseinrichtung mit Sensoren 11, 12, 13 einer Sensoranordnung 10 und/oder mit einer Detektorvorrichtung, wie einer Zeitmessvorrichtung oder einer Stromüberwachungsvorrichtung oder Leistungsüberwachungsvorrichtung oder dgl. für Betriebszustandsdaten des Schaltschrankgeräts bzw. von Gerätekomponenten desselben angeordnet. Die Sensoren sind vorteilhaft mit Schnittstellen für eine drahtlose Datenübertragung versehen, können zumindest teilweise aber auch zur drahtgebundenen Datenübertragung beispielsweise an eine Relaisstelle ausgebildet sein, über die dann die Sensordaten z. B. drahtlos weitergeleitet werden an eine gemeinsame Überwachungseinheit 20 der Überwachungseinrichtung. Die über die Erfassungseinrichtung aufgenommenen Betriebszustandsdaten werden vorzugsweise über drahtlose Datenübertragungsschnittstelle 22 an den Sensoren, dem Schaltschrankgerät 2, wie z. B. Klimagerät oder dem Schaltschrank 1 oder auch einem davon entfernt angeordneten Relais über über die Übertragungsstrecke 23 und eine weitere drahtlose Datenübertragungsschnittstelle 21 der Überwachungseinheit 20 übertragen. Auch ist eine Anzeigeeinrichtung 24 mit einer Sichtanzeige und/oder akustischen Anzeige vorhanden, die in die Überwachungseinheit integriert oder von dieser entfernt ist und mit dieser in Datenübertragungsverbindung steht. Damit ergibt sich die Möglichkeit einer Fernwartung z. B. unter Einbeziehung eines Datennetzes bzw. Bussystems. Die Anzeigeeinrichtung 24 kann beispielsweise als handgetragene Anzeigeeinheit mit Rechnereinheit ausgebildet und zur drahtlosen Datenübermittlung zwischen ihr und der Überwachungseinheit 20 ausgestaltet sein, wodurch sich für eine Prüfperson eine einfach zu handhabende, mobile Abfrageeinheit mit Anzeige ergibt.

Die in dem Schaltschrankgerät 2, dem Schaltschrank 1 bzw. der Schaltschrankanordnung und/oder der Überwachungseinheit 20 angeordnete Auswerteeinrichtung weist eine Sammeleinrichtung für die Funktion des Schaltschrankgerätes beeinflussende bzw. mit ihr im Zusammenhang stehende Betriebszustandsdaten auf, die unterschiedliche physikalische Zustände des Schaltschrankgerätes, beispielsweise des Klimagerätes 2 und seiner Gerätekomponenten wie Lüfter 3, Kompressor 4, Ventilen 5 und dgl. betreffen. Die Betriebszustandsdaten umfassen dabei die eigentliche Funktion des Schaltschrankgerätes 2, d. h. seine eigentliche Arbeitsweise betreffende Funktionsdaten und/oder äußere Einflussfaktoren betreffende Umgebungsdaten, wobei zu den Funktionsdaten beispielsweise auch durchgeführte Wartungsmaßnahmen, in dem Schaltschrankgerät auftretende Schwingungen, Geräusche, Wärme, Rauch, Leistungsparameter, Störungen, Laufzeiten oder dgl. gehören, und die Umgebungsdaten z. B. Umgebungstemperaturen, Schwingungen oder Vibrationen in Folge äußerer Erschütterungen, Feuchte, Rauch oder Einwirkungen durch menschliche Einflüsse, wie z. B. unberechtigter Zugang oder gewaltsame Einwirkungen umfassen, wozu entsprechende Sensoren, z. B. auch Bildaufnehmer oder akustische Sensoren neben Temperatursensoren, Rauchsensoren, Feuchtesensoren, Vibrationssensoren und/oder Zugangssensoren vorhanden sind.

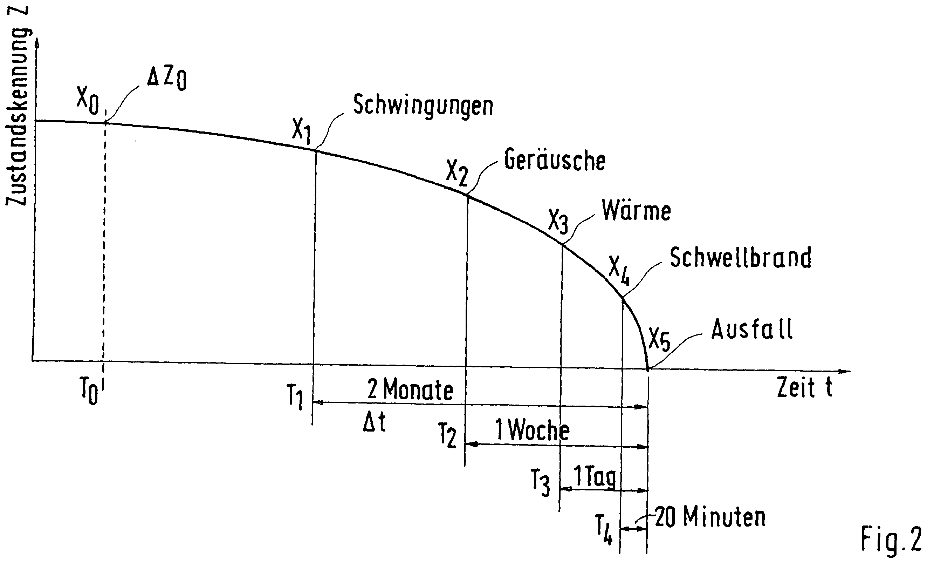

Mittels der Sammeleinrichtung werden derartige unterschiedliche physikalische Betriebszustandsdaten über einen vergangenen Zeitraum hinweg aufgenommen und einer Verrechnungsvorrichtung der Auswerteeinrichtung zugeführt, die sich z. B. in der Überwachungseinheit 20 befindet, um aus den Betriebszustandsdaten durch deren Verrechnung Informationsdaten herzuleiten und der Anzeigeeinrichtung zu einer Anzeige für eine Prüfperson zur Verfügung zu stellen. Der vergangene Zeitraum kann sich dabei z. B. zurück erstrecken bis zum Einbau des betreffenden Schaltschrankgerätes oder einer überwachten Komponente 3, 4, 5 oder bis zu einem zurückliegenden Wartungszeitpunkt oder bis zum erstmaligen Eintreten eines anomalen Ereignisses, bei dem eine Abweichung von einem vorgegebenen Betriebszustand ΔZᵥ eintritt. Beispielsweise kann, wie Fig. 2 zeigt, eine derartige erstmalige Abweichung ΔZ₀ erstmalig zu einem Zeitpunkt t₀ auftreten, so dass sich ein betreffender Punkt X₀ des Zustandes Z in Abhängigkeit der Zeit t ergibt. In entsprechender Weise werden dann in der Sammeleinrichtung weitere Betriebszustandsdaten zu Zeitpunkten T₀, T₁, T₂, T₃, T₄ in in der Auswerteeinrichtung vorgegebenen Zeitabständen Δt oder bei Eintritt einer vorgegebenen Abweichung ΔZ und/oder bei Anforderung durch Servicepersonal gesammelt, wobei sich weitere Zustandspunkte X₁, X₂, X₃, X₄, X₅ ergeben. Die gesammelten Betriebszustandsdaten unterschiedlicher Art werden nach einem vorgegebenen Programm oder auch nach einer selbstlernenden Vorschrift verrechnet, um möglichst zuverlässig Informationsdaten herzuleiten, die über den Betriebszustand des Schaltschrankgerätes, beispielsweise des Klimagerätes 2 und/oder einer betreffenden Gerätekomponente 3, 4, 5 Auskunft geben. Beispielsweise werden bei Punkt X₁ auffällige Schwingungen, bei Punkt X₂ verstärkte oder geänderte Geräusche, bei Punkt X₃ erhöhte Wärme, bei Punkt X₄ Rauch oder ein Schwelbrand und bei Punkt X₅ eine erhebliche Funktionsstörung bzw. Geräteausfall von der Erfassungseinrichtung festgestellt.

Über eine Kopplung der Überwachungseinrichtung, insbesondere der Überwachungseinheit 20 mit anwenderseitigen Einbaugeräten, wie Servern oder dgl. z. B. über eine Switcher-Einheit mit gesteuerten Schaltern lassen sich vorteilhaft auch anwenderseitige Geräte in die Überwachungseinrichtung einbinden und deren Zustandsdaten anzeigen von der Prüfperson und auswerten.

Die Informationsdaten werden vorteilhaft nach Dringlichkeitsstufen kategorisiert und entsprechend ihrer Dringlichkeit mehr oder weniger auffällig gekennzeichnet, so dass die Prüfperson einen schnellen Überblick über die optische und/oder akustische Anzeige bei entsprechender Abfrage erhält. Beispielsweise können unkritische Betriebszustande über grün angezeigte bzw. hinterlegte Informationsdaten, kritischere über eine gelbe Darstellung und dringliche Informationsdaten über eine rote Anzeige dargestellt werden, wobei gleichzeitig eine betreffende, kritische Betriebszustandsart wie z. B. anomale Geräuschentwicklung, ungewöhnlicher Körperschall, Wärme, Rauch oder eine eingetretene Störung gegebenenfalls auch in Kombination kenntlich gemacht werden. Ferner wird die Prüfperson zu einer entsprechenden Service-Maßnahme angewiesen bzw. über die Notwendigkeit oder Zweckmäßigkeit einer solchen Maßnahme informiert.

Über die Informationsdaten erhält die Prüfperson z. B. beim Durchschreiten eines Raumes mit mehreren Schaltschränken und zugeordneten Schaltschrankgeräten schnell und eindeutig einen Überblick über die jeweiligen Betriebszustände z. B. über ein mitgeführtes Handgerät mit der Anzeigeeinrichtung, so dass bereits frühzeitig Servicemaßnahmen eingeleitet werden können. Servicepersonal kann beispielsweise auch beim Beheben einer Störung oder routinemäßigen Auswechseln einer Gerätekomponente den Betriebszustand anderer Schaltschrankgeräte bzw. Gerätekomponenten 3, 4, 5 abfragen und vorausschauend Maßnahmen ergreifen, um einem bevorstehenden Ausfall vorzubeugen oder anstehende Servicemaßnahmen vorzumerken. Auf diese Weise ergibt sich eine vorausschauende Instandhaltung mit erhöhter Betriebszuverlässigkeit der überwachten Schaltschrankgeräte, insbesondere Klimageräte 2, womit auch anwenderseitige Geräte vor einer Störung geschützt sind.

Zum Abfragen und zur Benutzerführung sind die Schaltschrankgeräte und Gerätekomponenten z. B. über die Sensoren mit einer eindeutigen Kennung identifizierbar. Eine drahtlose Übertragung mittels Funk ist störungssicher gegenüber elektromagnetischen Störfeldern ausgeführt und mit einer speziellen Übertragungstechnik mit Chirpsignalen im Frequenzbereich um etwa 2,4 GHz ausgestattet. Auf diese Weise ergibt sich eine eindeutige und sichere Datenübertragung für die Betriebsdatenerfassung und Anzeige.

## Patentansprüche

1. Überwachungseinrichtung für den Betrieb von Schaltschrankgeräten, insbesondere eines Klimagerätes (2), mit einer Erfassungseinrichtung für Betriebszustandsdaten der Schaltschrankgeräte, einer eine Auswerteeinrichtung aufweisenden Überwachungseinheit (20) und einer Anzeigeeinrichtung (24) zur Anzeige von Informationsdaten zu den Schaltschrankgeräten für eine Prüfperson, wobei die Auswerteeinrichtung eine Sammeleinrichtung für die Funktion des Schaltschrankgerätes beeinflussende unterschiedliche physikalische Betriebszustandsdaten über einen vergangenen Zeitraum hinweg und eine Verrechnungsvorrichtung für die Betriebszustandsdaten aufweist, und wobei der Anzeigeeinrichtung (24) bereits vor einer Störung aus den Betriebszustandsdaten unter Verrechnen mittels der Verrechnungsvorrichtung hergeleitete Informationsdaten für die Prüfperson bereitgestellt sind,
**dadurch gekennzeichnet,**
**dass** der vergangene Zeitraum sich von einem aktuellen Zeitpunkt bis zu dem Zeitpunkt der Erstinbetriebnahme des Schaltschrankgerätes oder einer betreffenden Gerätekomponente, oder bis zu einem zurückliegenden Wartungszeitpunkt, oder bis zum erstmaligen Auftreten eines anomalen Ereignisses, bei dem eine Abweichung von einem vorgegebenen Betriebszustand eintritt, erstreckt,
**dass** die Auswerteeinrichtung eine Vergleichseinrichtung aufweist, mit der festgestellt ist, wann mindestens eine vorgegebene Änderung (ΔZᵥ) einer bestimmten Betriebszustandsdatenart gegenüber einem zuletzt gespeicherten oder einem vorgegebenen Wert dieser Betriebszustandsdatenart eingetreten ist,
**dass** die Werte der betreffenden Betriebszustandsdatenart mit dem zugehörigen Zeitpunkt bei Überschreitung oder Feststellung der vorgegebenen Änderung (ΔZᵥ) in der Sammeleinrichtung ablegbar sind,
**dass** die Auswerteeinrichtung so ausgebildet ist, dass die Änderung (ΔZ₀) der Betriebszustandsdatenart in vorgegebenen Intervallen (Δt) oder bei Abfrage auf Anforderung der Prüfperson festgestellt wird,
**dass** die Verrechnungsvorrichtung zum Errechnen eines abgestuften Service-Anforderungsniveaus aus den Betriebszustandsdaten programmiert ist, und
**dass** die Service-Anforderungsniveaus in unterschiedlichen Dringlichkeitsstufen optisch und/oder akustisch über die Anzeigevorrichtung signalisierbar sind, wobei die Betriebszustandsdaten die Arbeitsvorgänge des Schaltschrankgerätes betreffende Funktionsdaten und äußere Einflussfaktoren betreffende Umgebungsdaten umfassen,
wobei die Funktionsdaten von dem Schaltschrankgerät verursachte Schwingungen, Geräusche, Wärme, Rauch, Leistungsparameter, eine Störung, Laufzeiten und Wartungsarbeiten umfassen, und wobei die Umgebungsdaten Umgebungstemperaturen, äußere Schwingungen, Feuchte und Rauch umfassen, und wobei die Überwachungseinrichtung an dem Schaltschrankgerät und in dessen Umgebung angeordnete Sensoren zur Erfassung der Betriebszustandsdaten mit einer drahtlosen oder drahtgebundenen Datenübertragungsschnittstelle aufweist..

2. Überwachungseinrichtung nach Anspruch 1,
**dadurch gekennzeichnet,**
**dass** die Verrechnungsvorrichtung zur Verrechnung nach vorgegebenen Algorithmen oder selbstlernend programmiert ist.

3. Überwachungseinrichtung nach einem der vorhergehenden Ansprüche,
**dadurch gekennzeichnet,**
**dass** die Erfassungseinrichtung und die Anzeigeeinrichtung (24) mit Schnitt stellen zur drahtlosen Datenübertragung über Funk ausgestaltet sind.

## Claims

1. A monitoring unit for an operation of switchgear cabinet devices, in particular a climate control unit (2), having a detection unit for operating state data of the switchgear cabinet devices, a monitoring device (20) with an evaluation unit, and a display unit (24) for displaying informational data relating to the switchgear cabinet devices to a testing specialist, wherein the evaluation unit has a collecting unit for various physical operating state data over a past time interval which influence the function of the switchgear cabinet device, and an offsetting unit for the operating state data, and wherein the display unit (24) is provided with informational data for the testing specialist, the informational data being derived from the operating state data through offsetting by the offsetting unit already before a malfunction occurs,
**characterized in that**
the past time interval extends from a current time point back to a time point of the initial startup of the control cabinet device or of a repsective device component, or to a past maintenance time point, or to to the first occurrence of an abnormal event in which a deviation from a predetermined operating state occurs,
wherein the evaluation unit has a comparison unit that determines when at least one predetermined change (ΔZᵥ) of a particular operating state data type has occurred in comparison to a last stored value or a preset value of the operating state data type, wherein the values of the respective operating state data type are storable in the collecting unit together with an associated time point when the predetermined change (ΔZᵥ) is exceeded or determined,
wherein the evaluation unit is designed such that the change (ΔZ₀) in the operating state data type is determined at preset time intervals (Δt) or by a query at a request of the testing specialist,
wherein the offsetting unit is programmed to calculate a graduated service requirement level from the operating state data, and wherein the service requirement levels can be signalled optically and/or acoustically via the display device in different stages of urgency, wherein the operating state data comprise functional data relating to operating processes of the switchgear cabinet devices and environmental data relating to external influencing factors,
wherein the functional data comprise vibrations, noise, heat, smoke, performance parameters, a malfunction, runtimes and maintenance work caused by the switchgear cabinet device, and wherein the environmental data comprise ambient temperature, external vibrations, humidity and smoke, and wherein the monitoring device comprises sensors arranged on the switchgear cabinet and in its vicinity for detecting the operating state data with a wireless or wired data transmission interface.

2. The monitoring unit according to claim 1, wherein the offsetting unit is programmed for offsetting in accordance with preset algorithms or in a self-teaching fashion.

3. The monitoring unit according to any of the preceding claims, wherein the detection unit and the display unit (24) have interfaces for wireless data transmission via a radio.

## Revendications

1. Dispositif de surveillance pour l'exploitation d'appareils d'armoires de commande, plus particulièrement d'un climatiseur (2), avec un dispositif de mesure pour des données d'état de fonctionnement des appareils d'armoires de commande, une unité de surveillance (20) comprenant un dispositif d'analyse et un dispositif d'affichage (24) pour l'affichage d'informations concernant les appareils d'armoires de commande pour un opérateur, le dispositif d'analyse comprenant un dispositif de collecte pour différentes données d'état de fonctionnement physiques influençant le fonctionnement de l'appareil d'armoire de commande sur une période passée et un dispositif de calcul pour les données d'état de fonctionnement et des informations, dérivées des données d'état de fonctionnement grâce au calcul au moyen du dispositif de calcul, étant mises à la disposition de l'opérateur sur le dispositif d'affichage (24) avant une panne,
**caractérisé en ce que**
la période passée s'étend d'un moment actuel jusqu'au moment de la première mise en service de l'appareil d'armoire de commande ou d'un composant de l'appareil concerne, ou jusqu'à un moment de maintenance passé ou jusqu'à la première apparition d'un événement anormal, lors duquel survient un écart par rapport à un état de fonctionnement prédéterminé,
le dispositif d'analyse comprend un dispositif de comparaison avec lequel il est constaté quand au moins une modification prédéterminée (ΔZᵥ) d'un type de données d'état de fonctionnement déterminé par rapport à une valeur dernièrement enregistrée ou prédéterminée de ce type de données d'état de fonctionnement est survenue,
les valeurs du type de données d'état de fonctionnement concerné peuvent être enregistrées dans le dispositif de collecte avec le moment correspondant lors d'un dépassement de la constatation de la modification prédéterminée (ΔZᵥ),
le dispositif d'analyse est conçu de façon à ce que la modification (ΔZ₀) du type de données d'état de fonctionnement soit constatée à des intervalles prédéterminés (Δt) ou lors d'une requête de l'opérateur,
le dispositif de calcul est programmé pour le calcul d'un niveau d'exigence de service à partir des données d'état de fonctionnement et
les niveaux d'exigence de service peuvent être signalés de manière optique et/ou acoustique à différents niveaux d'urgence par l'intermédiaire du dispositif d'affichage,
les données d'état de fonctionnement comprenant les données de fonctionnement concernant les processus de fonctionnement de l'appareil d'armoire de commande et les données environnementales concernant les facteurs d'influence extérieurs,
les données de fonctionnement comprenant les vibrations, les bruits, la chaleur, la fumée, les paramètres de puissance, une panne, les temps de marche et les travaux de maintenance provoqués par l'appareil d'armoire de commande et les données environnementales comprenant les températures ambiantes, les vibrations, l'humidité et la fumée extérieures et le dispositif de surveillance comprenant, sur l'appareil d'armoire de commande et autour de celui-ci, des capteurs pour la mesure des données d'état de fonctionnement avec une interface de transmission de données sans fil ou filaire.

2. Dispositif de surveillance selon la revendication 1,
**caractérisé en ce que**
le dispositif de calcul est programmé pour le calcul selon les algorithmes prédéterminés ou par auto-apprentissage.

3. Dispositif de surveillance selon l'une des revendications précédentes,
**caractérisé en ce que**
le dispositif de mesure et le dispositif d'affichage (24) sont conçus avec des interfaces pour une transmission de données sans fil par radio.
